Europäisches Patentamt

European Patent Office

Office européen des brevets

(11) Publication number: **0 122 792**
**B1**

(12) EUROPEAN PATENT SPECIFICATION

(45) Date of publication of patent specification: **26.09.90**

(21) Application number: **84302537.0**

(22) Date of filing: **13.04.84**

(51) Int. Cl.⁵: **H 01 F 10/16, H 01 F 1/14, C 22 C 1/00**

(54) Amorphous magnetic alloy of Co-Nb-Zr system and magnetic head made from the same.

(30) Priority: **15.04.83 JP 65276/83**

(43) Date of publication of application:
**24.10.84 Bulletin 84/43**

(45) Publication of the grant of the patent:
**26.09.90 Bulletin 90/39**

(84) Designated Contracting States:
**DE GB**

(56) References cited:
**EP-A-0 061 290**
**DE-A-3 146 031**
**FR-A-2 522 188**

**PATENTS ABSTRACTS OF JAPAN, vol. 2, no. 147, (E-77), December 13, 1978, page 9441 E78 & JP-A-53 116 809**

(73) Proprietor: **HITACHI, LTD.**
**6, Kanda Surugadai 4-chome**
**Chiyoda-ku, Tokyo 100 (JP)**

(72) Inventor: **Otomo, Shigekazu**
**Tsutsujinodanchi 2-15-404 259-1, Kamihirose**
**Sayama-shi (JP)**
Inventor: **Kumasaka, Noriyuki**
**1-24 Suehirocho-1-chome**
**Ome-shi (JP)**
Inventor: **Fujiwara, Hideo**
**1272-50 Shimotomi**
**Tokorozawa-shi (JP)**
Inventor: **Takayama, Shinji**
**346 Iguchi**
**Mitaka-shi (JP)**
Inventor: **Yamashita, Takeo**
**Hitachi-Owada Apartment House F204**
**47-3 Akatsukicho-1-chome Hachioji-shi (JP)**
Inventor: **Saito, Noritoshi**
**Hitachi-Owadaryo 48-18 Akatsukicho-1-chome**
**Hachioji-shi (JP)**
Inventor: **Kudo, Mitsuhiro**
**8-63 Sakaecho-1-chome Hamuramachi**
**Nishitama-gun Tokyo (JP)**

Courier Press, Leamington Spa, England.

**EP  0 122 792  B1**

(74) Representative: **Paget, Hugh Charles Edward et al**
**MEWBURN ELLIS & CO. 2/3 Cursitor Street**
**London EC4A 1BQ (GB)**

## Description

The present invention relates to a method of making a magnetic head including an amorphous magnetic alloy of Co-Nb-Zu system and to a magnetic head including this alloy.

In recent years, magnetic recording technology has achieved remarkable progress owing to the development of magnetic tapes with high coercive force and development of materials for high performance magnetic heads for use in combination with such magnetic tape. Particularly, metal powder tape having high coercive force affords remarkable improvement in both the output level and C/N ratio (output-noise ratio) in the high recording density region of recording wavelength between several μm and 1 μm or less, as compared with conventional tapes. This in turn makes it possible to attain a remarkable increase in the recording density particularly in the uses which require high recording density such as VTR.

Conventionally, ferrite has been used as the material of the magnetic heads in VTRs. The magnetic head made of ferrite, however, has a saturation flux density which is about 5,000 gauss (0.5T) at the greatest, so that it cannot provide sufficiently large recording field. Under this circumstance, there is an increasing demand for magnetic heads made of metallic magnetic materials having high saturation flux density, in order to enjoy the advantages of the metal powder tape with high coercive force.

Hitherto, crystalline alloy such as Fe-Al-Si system alloys or Fe-Ni system alloys have been used and, in recent years, amorphous magnetic alloys have been developed to cope with this demand. The crystalline alloys such as Fe-Al-Si system alloys and Fe-Ni system alloys, however, have magneto crystalline anisotropy due to their crystalline nature. In order to obtain excellent magnetic properties suitable for magnetic heads, particularly high magnetic permeability, it is desirable that the composition of the material approximates the composition which nullifies the magneto crystalline anisotropy. Insofar as the material is used for magnetic heads, it is also necessary to substantially nullify the magnetostriction constant. These requirements undesirably limit the range of composition usable as the material of the magnetic heads and, hence, make production difficult due to difficulty in the control of composition.

On the other hand, amorphous magnetic alloys offer various advantages. Namely, the amorphous magnetic alloy, which exhibits no magneto crystalline anisotropy, can offer a wide choice of composition because only the magnetostriction constant has to be adjusted. In addition, even if the magnetic permeability is degraded due to induced magnetic anisotropy, the original magnetic permeability can easily be recovered by a suitable heat treatment. Moreover, the amorphous magnetic alloys can possess high saturation flux density and high coercive force which could never be attained by crystalline alloys. Furthermore, the amorphous magnetic alloys suffer from only small eddy current loss due to a high electric resistance. There are two types of amorphous alloys of the kind described: namely, metal-metal system amorphous alloy which does not contain any metalloid element and contains metallic element as the glass former element; and metal-metalloid system amorphous alloy containing metalloid element as the glass former element. The metal-metal system amorphous alloy is more suitable for use as the magnetic head material than the metal-metalloid system amorphous alloy because the former has higher crystallization temperature and higher corrosion and wear resistances than the latter.

Hitherto, these amorphous magnetic alloys have been produced by a splat cooling process, in the form of films having thicknesses ranging between 10 and 50 μm. In recent years, however, a remarkable progress has been made in the field of technic for forming thin films, e.g. sputtering, and it has become possible to produce even an amorphous magnetic alloy of such a composition as could never be produced due to oxidation of the specimen. The current technic for forming this films permits also an easy lamination of the amorphous alloy films and insulating films such as oxide films. This in turn permits the production of a material having reduced eddy current loss and, hence, suitable for use as the material of heads in devices operating at high frequency, e.g. VTRs and computers. The current thin film forming technic is applicable also to the production of composite type magnetic head in which the amorphous magnetic alloy is used only in the portion of the magnetic head around the gap while the other portions are made of ferrite, as well as to thin film magnetic recording head.

Japanese Patent Application Laid-Open Publications Nos. 55-138049, 56-84439 and 57-155339 disclose metal-metal system amorphous magnetic alloys, particularly amorphous magnetic alloys containing Zr as the glass former element which are comparatively easy to produce and which have superior properties.

The present inventors have produced thin film of the above-mentioned amorphous magnetic alloy containing Zr by sputtering and measured the properties of the product film. As a result, the present inventors have found that the amorphous magnetic alloys of Co-Nb-Zr system having compositions disclosed in the above-mentioned Laid-Open Publications and possessing saturation flux density of about 7.5 kG (0.75 T) or greater generally exhibit comparatively large magnetostriction constant and, therefore, are rather unsuitable for use as the material of the magnetic heads.

EP—A—61290 discloses, *inter alia* amorphous magnetic alloys of Co-Nb-Zr made by grinding using the single roll process. DE—A—3 146 031 also discloses, *inter alia*, a Co-Nb-Zr amorphous alloy.

## Summary of the invention

It has been found possible to provide an amorphous magnetic alloy of Co-Nb-Zr system having a saturation flux density of 7.5 kG (0.75 T) or greater and extremely small absolute value of magneto-striction constant, particularly an amorphous magnetic alloy produced by sputtering, as well as a magnetic head of high performance produced from such amorphous magnetic alloy.

The present inventors have experimentally produced amorphous magnetic alloys containing various amounts of Zr as the glass former element and measured properties of these alloys. The inventors, as a result of this measurement, found that an extremely small absolute value of magnetostriction constant including zero, as well as magnetostriction constant which is slightly below zero, can be obtained. The present invention is based upon this discovery.

The present invention is set out in claims 1 and 7.

Particularly preferred is the case where the composition of the amorphous magnetic alloy of Co-Nb-Zr system falls, in terms of atomic percent, within the region defined by straight lines connecting, in the ternary composition diagram, a point (83% Co, 13% Nb, 4% Zr), a point (86% Co, 11% Nb, 3% Zr), a point (85% Co, 13% Nb, 2% Zr) and a point (83% Co, 15% Nb, 2% Zr).

A magnetic head may be produced with the amorphous magnetic alloys used in the invention by depositing the alloy on a ferromagnetic substrate by sputtering so that only the portion requiring high saturation flux density is constituted by the amorphous magnetic alloys while other portion is constituted by ferromagnetic ferrite. This magnetic head is easy to produce and exhibits a superior performance.

In the accompanying drawings:

Fig. 1 is a diagram showing the relationship between compositions and properties of amorphous magnetic alloys of Co-Nb-Zr system for explaining the invention;

Fig. 2 is a ternary composition diagram showing the composition range of an amorphous magnetic alloy of Co-Nb-Zr system used in the invention;

Fig. 3 is a perspective view of a magnetic head in accordance with the invention;

Fig. 4 is a perspective view of a conventional magnetic head formed from single crystal of Mn-Zn ferrite, for the purpose of comparison of head properties;

Fig. 5 is a graph showing the properties of the magnetic head made of an amorphous magnetic alloy in accordance with the invention; and

Figs. 6 and 7 are perspective views of other examples of magnetic head made of the amorphous magnetic alloy used in the invention.

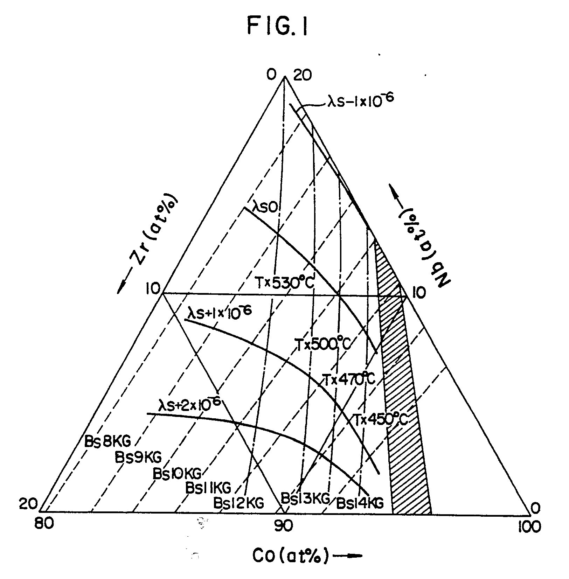

Amorphous magnetic alloys of Co-Nb-Zr system of different compositions were experimentally produced by a radio frequency diode sputtering apparatus. Fig. 1 shows the relationship between the compositions of the amorphous magnetic alloy and the properties of the same such as saturation flux density Bs, magnetostriction constant λs and crystallization temperature Tx. In this experiment, the sputtering was conducted under the condition of argon pressure of $5 \times 10^{-3}$ Torr (0.7 Pa). RF input power of 250 W and water cooling of substrate. The film thickness was about 1.5 μm. More specifically, Fig. 1 shows only a part of a Co-Nb-Zr ternary composition diagram having Co content of not smaller than 80 atomic % (expressed simply by "%", hereinunder). In this Figure, the hatched area shows the boundary region between the amorphous region and crystalline region. Namely, the alloy having Co content greater than that of this boundary region takes a crystalline state, while the alloys having smaller Co content takes amorphous state. The alloys having compositions falling within this boundary region can take either crystalline or amorphous state or a state in which amorphous phase and crystalline phase coexist, depending on the conditions of production of the alloy. In this Figure, different levels of saturation flux density Bs are shown by different broken-line curves. It will be seen that the saturation flux density Bs is increased as the Co content becomes greater. On the other hand, different levels of crystallization temperature Tx are shown by different chain-line curves. It will be seen that the crystallization temperature Tx becomes lower as the CO and Nb contents are increased. Full line curves show different levels of magnetostriction constant λs. It will be seen that the magnetostriction constant λs is about $-1 \times 10^{-6}$ when the Zr content is 0% and about $+3 \times 10^{-6}$ when the Nb content is 0%. It will be seen that the magnetostriction constant is zero when the ratio Nb/Zr between the Nb and Zr contents is substantially 3:1. In the region of amorphous alloy, the coercive force is as small as about 0.2 Oe (16A/m). Thus, in the compositions having Co content not smaller than 80%, there is a region in which the magnetostriction constant is zero or the absolute value of the magnetostriction constant is extremely small or the magnetostriction constant is slightly below zero, within the range of Zr content not greater than 5%. These properties are obtainable also with the amorphous magnetic alloy films produced by other thin film forming method such as triode or tetrode plasma high rate sputtering method, high rate magnetron sputtering method, ion beam sputtering method, ion plating method, vacuum evaporation method and so forth.

Hitherto, it has been believed that the composition range having Zr content of not greater than 5% cannot be practical as the composition for amorphous magnetic alloy. For instance, Japanese Patent Application Laid-Open Publication No. 55-138049 states that the production of amorphous magnetic alloy is difficult with the composition having Zr content of not greater than 5%, while Japanese Patent Application Laid-Open Publication No. 56-84439 states that the production of amorphous magnetic alloy is not easy when the Zr content is 7% or less. Further, Japanese Patent Application Laid-Open Publication No. 57-155339 also states that Zr content less than 7% is not preferred for the production of amorphous magnetic alloy because such a small Zr content makes the alloy brittle undesirably.

In sharp contrast to the above knowledge, the invention is based on an amorphous magnetic alloy having a magnetostriction constant which is zero or whose absolute value is extremely small or which is slightly below zero, within the unobvious composition range having Zr content of not greater than 5%.

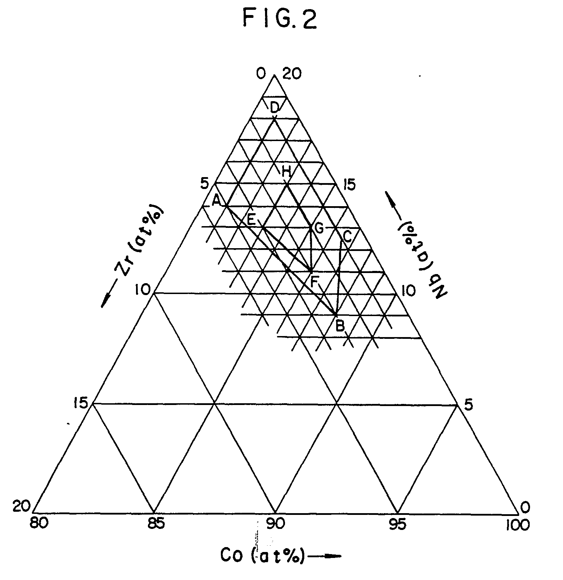

As will be clear from the result of the experiment described before, the amorphous magnetic alloy of Co-Nb-Zr system used in the invention as the material of magnetic heads had a composition which falls within the region defined by straight lines connecting, in a ternary composition diagram shown in Fig. 2, point A (81% Co, 14% Nb, 5% Zr), point B (88% Co, 9% Nb, 3% Zr), point C (86.5% Co, 12.5% Nb, 1% Zr) and point D (81% Co, 18% Nb, 1% Zr). If the Co content is smaller than the line connecting the points A and D, the saturation flux density of the alloy comes down below about 7.5 kG (0.75 T) undesirably to negate the advantage offered by the invention, i.e. saturation flux density higher than that of ferrite which has been used conventionally. On the other hand, a Zr content greater than the line connecting the points A and B causes a large magnetostriction constant of about $0.2 \times 10^{-6}$ or greater which is quite unsuitable for the magnetic head material. When the Co content is greater than the line connecting the point B and C, the crystallization temperature is undesirably reduced below 460°C. A Zr content smaller than the line connecting the points C and D causes the magnetostriction constant to take a negative value of which absolute value being $0.7 \times 10^{-6}$ to $0.8 \times 10^{-6}$ which is too large to make the alloy usable for the magnetic heads. As will be seen from Fig. 1, the addition of Zr to the amorphous magnetic alloy of Co-Nb system is effective because it broadens the composition ranges for amorphous state, decreases the magnetostriction constant and increases the crystallization temperature. These effects become appreciable when the Zr content exceeds 1%.

According to a more preferred form, the amorphous magnetic alloy of Co-Nb-Zr system used in the invention has a composition which falls within the region defined by straight lines connecting, in a ternary composition diagram shown in Fig. 2, point E (83% Co, 13% Nb, 4% Zr), point F (86% Co, 11% Nb, 3% Zr), point G (85% Co, 13% Nb, 2% Zr) and point H (83% Co, 15% Nb, 2% Zr). The reasons why this region is more preferred are as follows. Namely, any Zr content exceeding the line connecting the points E and F makes a magnetostriction constant greater than 0 substantially. When the Co content is greater than the line connecting the points F and G, the crystallization temperature undesirably comes down below about 490°C. A Zr content smaller than the line connecting the points G and H causes the magnetostriction constant to take a negative value of which absolute value being greater than about $0.5 \times 10^{-6}$. When the Co content is smaller than the line connecting the points H and E, the saturation flux density becomes smaller than about 8.7 kG (0.87 T).

When the amorphous magnetic alloy of the invention is used as the material of magnetic heads or the like, in most cases, the alloy after production is preferably subjected to a heat treatment with or without the influence of magnetic fluid, as in the case of other known amorphous alloys, before it is put into use. In the production of an amorphous magnetic alloy film by a thin film forming technique such as sputtering, it is a common measure to use a material, as the substrate, having a thermal expansion coefficient smaller than that of the amorphous magnetic alloy. Examples of such a substrate material are glass, ceramics, non-magnetic ferrite, ferromagnetic ferrite, Si wafer or the like. When the amorphous magnetic alloy film coated on the substrate undergoes a heat treatment, a tensile stress is applied to the film in the plane parallel to plane of the film. In this case, when the magnetostriction constant takes a positive value, the axis of easy magnetization appears in the direction of the tensile stress, i.e. in the direction parallel to the plane of the film, whereas when the magnetostriction constant takes a negative value, the axis of easy magnetization appears in the direction perpendicular to the plane of the film. In general, the magnetic permeability at radio frequency of the material hvaing uniaxial magnetic anisotropy is small when measured in the direction of axis of easy magnetization and large when measured in the direction perpendicular to the direction of axis of easy magnetization. Therefore, in the magnetic head which is operated by the magnetic flux flowing in the direction of the plane of the amorphous magnetic alloy film coated on the substrate, it is preferred that the film has a magnetostriction constant slightly below zero because, in such a case, a high magnetic permeability appears towards the inside of the amorphous magnetic alloy film. However, a negative magnetostriction constant having a large absolute value, e.g. greater than $0.8 \times 10^{-6}$, rather reduces the magnetic permeability. In also the case of ordinary thin film magnetic head having a rectangular magnetic path in the thin magnetic film coated on the substrate and operated by the magnetic flux flowing in the longitudinal direction thereof, a higher magnetic permeability in the longitudinal direction is obtained by causing the magnetostriction constant to take a negative value, because the tensile stress is applied in the longitudinal direction. Similar phenomenon takes place in a magnetic head in which a ribbon-shaped amorphous magnetic alloy is used in combination with a glass, ceramics, or non-magnetic or ferromagnetic ferrite. Thus, the amorphous magnetic alloy as the material of magnetic heads preferably has a magnetostriction constant which is slightly below zero. For this reason, as mentioned before the composition of the amorphous magnetic alloy used in the invention is selected to contain greater region for negative magnetostriction constant than for positive magnetostriction constant.

The production of magnetic heads essentially employs various heating steps. For instance, in the production of magnetic head of VTR, halves of the head core are connected to each other through a functional gap, usually by means of a bonding glass. This bonding glass has to be treated at least about 410°C, even in the case of glass having the lowest melting point. Namely, it is quite difficult to bond the core halves at a temperature below about 410°C by means of the bonding glass. When the bonding is conducted at 410°C, the amorphous magnetic alloy used as the head material preferably has a crystallization temperature of not lower than 460°C. For conducting the glass bonding in the magnetic head production process stably at a high yield, it is preferred that the bonding is made at a temperature not lower than 440°C. This in turn requires the crystallization temperature of the amorphous magnetic alloy not lower than 490°C. On the other hand, amorphous magnetic alloy having a saturation flux density of not greater than 8.7 kG (0.87 T) cannot provide a magnetic head which has recording characteristics well matched for the high coercive force of metal powder tape, but a performance superior to that of conventional ferrite magentic head can be obtained if the saturation flux density is not smaller than 7.5 kG (0.75 T).

As has been explained above, the amorphous magnetic alloy of Co-Nb-Zr system used in the invention has a magnetostriction constant ranging between about $-0.8 \times 10^{-6}$ and about $+0.2 \times 10^{-6}$. Thus, the magnetostriction constant of the amorphous magnetic alloy of invention has an extremely small absolute value, and the composition thereof is selected to have greater part in the area for negative magnetostriction constant than in the area for positive magnetostriction constant. In addition, the saturation flux density is as large as about 7.5 kG (0.75 T) at the smallest and can be increased up to about 11.5 kG by suitably selecting the composition. In addition, the crystallization temperature is higher than about 460°C and can be increased to about 550°C by suitably selecting the composition.

The advantages of the invention cannot be impaired even if the amorphous magnetic alloy of the invention contains slight amounts of impurities or additives.

Embodiments:

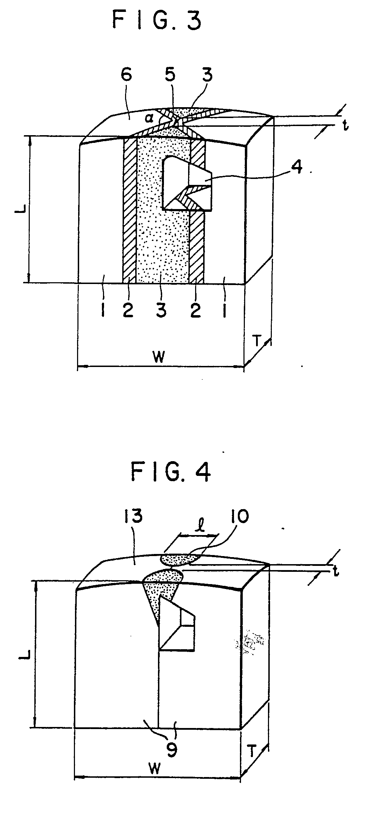

A description will be made hereinunder as to an example of the magnetic head of the invention making use of the amorphous magnetic alloy of Co-Nb-Zr system described above. Namely, Fig. 3 shows a composite type magnetic head of the invention. More specifically, this magnetic head was produced by forming, on an Mn-Zn ferrite substrate, an amorphous magnetic alloy having a composition consisting of, by atomic percent, 84.5% of Co, 13% of Nb and 2.5% of Zr and a thickness of about 20 μm, by a radio frequency sputtering conducted under an argon pressure of $5 \times 10^{-3}$ Torr (0.7 Pa). Thus, the magnetic head in accordance with the invention has a single crystal 1 of Mn-Zn ferrite serving as the substrate, an amorphous magnetic alloy film 2, a bonding glass 3, a window 4 for winding and a functional gap 5. The head is so sized as to have a ferrite apex angle α of 60°, track width T of 28 μm, core thickness T of 140 μm, the core width W of 2 mm, core height L of 1.7 mm, gap length of 0.3 μm and a gap depth of 45 μm. The magnetic properties of the amorphous magnetic alloy film 2 used in this magnetic head were: 9.5 kG (0.05 T) in saturation flux density, 0.2 Oe (16 A/m) in coercive force, 510°C in crystallization temperature and $-0.3 \times 10^{-6}$ in magnetostriction constant. As the bonding glass 3 for bonding the magnetic core halves and for filling the groove around the functional gap, a glass having a low melting point and containing PbO as the major constituent was used at a bonding temperature of 450°C.

For the purpose of comparison of the magnetic properties with the magnetic head of the invention, a comparison magnetic head was produced using the conventional material of Mn-Zn ferrite single crystal as shown in Fig. 4. In this Figure, a reference numeral 9 denotes an Mn-Zn ferrite single crystal, while 10 denotes a filler glass. This comparison magnetic head was sized to have equal track width t, core thickness T, core width W, core length L, gap length and gap depth to those of the magnetic head of the invention. Length l of the narrow track in the tape sliding surface 13 was selected to be 200 μm.

Windings were applied on the magnetic head of the invention and the comparison magnetic head to measure the inductance values of these heads. As a result, it was confirmed that both heads showed substantially equal inductance value.

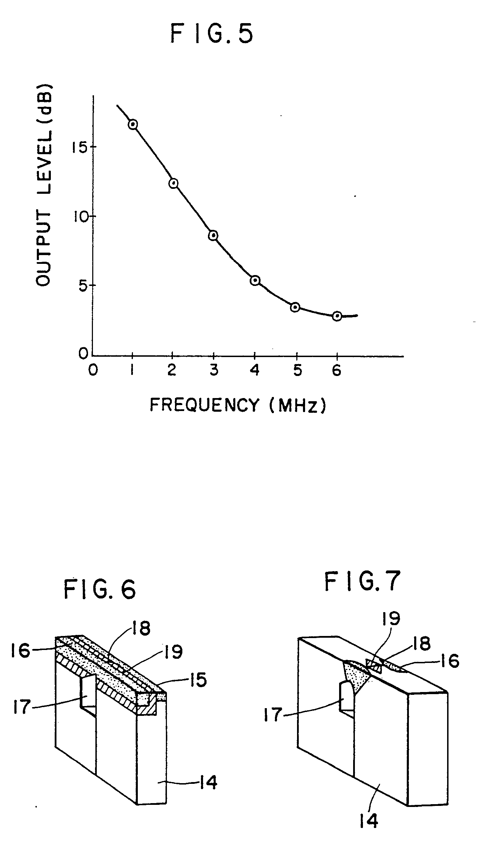

Fig. 5 shows the recording-reproducing outputs as measured using a metal powder tape of Hc 1260 Oe (100 kA/m) at a relative tape running speed of 5.8 m/s. As will be seen from this Figure, the magnetic head of the invention provides a remarkable increase in the output level which amounts to 3 to 17 dB at frequency range of 1 to 6 MHz, when the recording-reproducing output of the Mn-Zn ferrite single crystal head is set to 0 dB.

Figs. 6 and 7 show different magnetic heads produced in accordance with the method of the invention, produced from sputtered thin film of Co-Nb-Zr system amorphous magnetic alloy similar to that of the embodiment described hereinbefore. In these figures, a reference numeral 19 denotes an amorphous magnetic alloy film, 14 denotes a single crystal of Mn-Zn ferrite, 15 denotes a non-magnetic material, 16 denotes a bonding glass, 17 denotes a window for winding, and 18 denotes a functional gap. The magnetic heads shown in these Figure also showed remarkable increase in the output over the conventional magnetic head using single crystal of Mn-Zn ferrite.

As has been described above, the amorphous magnetic alloy used in the invention can be used quite advantageously as a magnetic material with high permeability in various magnetic heads which are composed of a substrate and a film of magnetically permeable material formed on the substrate. It will be clear also that the shapes and constructions of the magnetic heads of the described embodiments are not exclusive and the advantages of the invention can equally be obtained when the invention is applied to magnetic heads having different shapes and constructions. Usually, this film of magnetic material having high magnetic permeability is disposed at least around the functional gap in the magnetic head. In the case of a magnetic head for perpendicular recording, it is general to use this material as the material of the main pole.

A magnetic head similar to that shown in Fig. 3 was produced by forming, on an Mn-Zn ferrite substrate, a thin film of amorphous magnetic alloy having a composition consisting of 83.5% of Co, 13% of Nb and 3.5% of Zr, by means of a high rate magnetron sputtering apparatus under an argon pressure of $5 \times 10^{-3}$ Torr ($37.5 \times 10^{-6}$ Pa). This amorphous magnetic alloy film showed magnetic properties of 9.3 kG (0.93 T) in saturation flux density, 0.2 Oe (16 A/m) in coercive force, 530°C in crystallization temperature and $-0.2 \times 10^{-6}$ in magnetostriction constant. The magnetic head produced with this amorphous magnetic alloy showed a remarkable increase in the recording-reproducing output level by an amount of 3 to 17 dB over the conventional magnetic head made of Mn-Zn ferrite single crystal, when used in combination with the metal powder type of high coercive force at frequency range of 1 to 6 MHz, as in the case of the magnetic head described before.

Thus, the amorphous magnetic alloy formed by the high rate magnetron sputtering method and the magnetic head using this alloy exhibit properties substantially equal to those of the alloy and magnetic head produced by the ratio frequency diode sputtering method. The use of the high rate magnetron sputtering method, in addition, provides a rate of forming the amorphous magnetic alloy which is about 6 to 12 times as high as that offered by the radio frequency diode sputtering method.

As will be fully realized from the foregoing description, the magnetic heads produced by the invention can advantageously exhibit performance much better than that of the conventional magnetic head which employs Mn-Zn ferrite in the area around the gap.

**Claims**

1. A method of making a magnetic head comprising arranging a pair of magnetic films (2; 19) to form between them a non-magnetic gap (5; 18), said films being made of an amorphous magnetic alloy consisting of Co-Nb-Zr having a composition which falls, in terms of atomic percent, within the region defined by straight lines connecting, in a ternary composition diagram assuming the total of contents of these three elements to be 100, a point (80% Co, 14% Nb, 5% Zr), a point (88% Co, 9% Nb, 3% Zr), a point (86.5% Co, 12.5% Nb, 1% Zr) and a point (81% Co, 18% Nb, 1% Zr), characterized in that said films (2; 19) are made by sputtering on surfaces of a pair of substrates (1; 14).

2. A method according to claim 1, wherein said composition of the magnetic alloy falls, in terms of atomic percent, within the region defined by straight lines connecting, in said ternary composition diagram, a point (83% Co, 13% Nb, 4% Zr), a point (86% Co, 11% Nb, 3% Zr), a point (85% Co, 13% Nb, 2% Zr) and a point (83% Co, 15% Nb, 2% Zr).

3. A method according to claim 1 or claim 2, wherein said substrates (1; 14) are made of ferromagnetic ferrite.

4. A method according to any one of claims 1 to 3 including applying bonding glass (3; 16) to bond said pair of magnetic films (2; 19).

5. A method according to claim 4 wherein the pair of magnetic films (2; 19) are bonded by said glass at a temperature not less than 440°C and the amorphous magnetic alloy has a crystallization temperature not lower than 490°C.

6. A method according to claim 4 wherein the pair of films (2; 19) are bonded by said glass at a temperature not lower than 410°C and the alloy has a crystallization temperature not lower than 460°C.

7. A magnetic head comprising:
a pair of magnetic films (2) arranged opposite one another and forming between them a non-magnetic gap (5), said magnetic films being made of an amorphous magnetic alloy of Co-Nb-Zr system and having a composition which falls, in terms of atomic percent, within the region defined by straight lines connecting, in a ternary composition diagram assuming the total of contents of these three elements to be 100, a point (81% Co, 14% Nb, 5% Zr), a point (88% Co, 9% Nb, 3% Zr), a point (86.5% Co, 12.5% Nb, 1% Zr) and a point (81% Co, 18% Nb, 1% Zr),
characterized in that said magnetic films (2) have a negative magnetostriction constant and are V-shaped films formed by sputtering on a pair of substrates (1) each having a ridge, said pair of substrates (1) being arranged so that the apex of the ridge of each of said pair of substrates is facing the apex of the ridge of the other, said films (2) being formed on the surfaces of the ridges so that at the apexes of the ridges the films are closest to each other and provide said non magnetic gap (5), said pair of substrates (1) being made of a material having a smaller coefficient of thermal expansion than that of said amorphous magnetic alloy, and
there being bonding glass (3) which bonds said pair of V-shaped magnetic films (2) to each other.

8. A magnetic head according to claim 7, wherein said composition falls, in terms of atomic percent, within the region defined by straight lines connecting, in said ternary composition diagram, a point (83% Co, 13% Nb, 4% Zr), a point (86% Co, 11% Nb, 3% Zr), a point (85% Co, 13% Nb, 2% Zr) and a point (83% Co, 15% Nb, 2% Zr).

9. A magnetic head according to claim 7 or claim 8 wherein said bonding glass is a glass containing PbO as a major constituent.

## Patentansprüche

1. Verfahren zur Herstellung eines Magnetkopfes, wobei ein Paar von Magnetfilmen (2; 19) unter Bildung eines dazwischen liegenden nicht-magnetischen Spaltes (5; 18) angeordnet wird, wobei die Filme aus einer amorphen magnetischen Co-Nb-Zr-Legierung bestehen, deren Zusammensetzung in Atomprozent in den Bereich fällt, der in einem ternären Zusammensetzungsdiagramm unter der Annahme, daß der Gesamtgehalt der drei Elemente 100 beträgt, durch Gerade definiert ist, die einen Punkt (80% Co, 14% Nb, 5% Zr), einen Punkt (88% Co, 9% Nb, 3% Zr), einen Punkt (86,5% Co, 13,5% Nb, 1% Zr) und einen Punkt (81% Co, 18%, Nb, 1% Zr) verbinden, dadurch gekennzeichnet, daß die Filme (2; 19) durch Aufsputtern auf die Oberflächen eines Paares von Substraten (1; 14) erzeugt werden.

2. Verfahren nach Anspruch 1, wobei die Zusammensetzung der magnetischen Legierung in Atomprozent in einen Bereich fällt, der in dem ternären Zusammensetzungsdiagramm durch Gerade definiert ist, die einen Punkt (83% Co, 13% Nb, 4% Zr), einen Punkt (86% Co, 11% Nb, 3% Zr), einen Punkt (85% Co, 13% Nb, 2% Zr) und einen Punkt (83% Co, 15% Nb, 2% Zr) verbinden.

3. Verfahren nach Anspruch 1 oder 2, wobei die Substrate (1; 14) aus ferromagnetischem Ferrit bestehen.

4. Verfahren nach einem der Ansprüche 1 bis 3, wobei Haftglas (3; 16) zum Ankleben der beiden Magnetfilme (2; 19) aufgetragen wird.

5. Verfahren nach Anspruch 4, wobei die beiden Magnetfilme (2; 19) mittels des Glases bei einer Temperatur nicht unter 440°C geklebt werden und die amorphe magnetische Legierung eine Kristallisationstemperatur nicht unter 490°C aufweist.

6. Verfahren nach Anspruch 4, wobei die beiden Filme (2; 19) mittels des Glases bei einer Temperatur nicht unter 410°C geklebt werden und die Legierung eine Kristallisationstemperatur nicht unter 460°C aufweist.

7. Magnetkopf, umfassend ein Paar von unter Bildung eines dazwischen liegenden nicht-magnetischen Spaltes (5) einander gegenüber angeordneten Magnetfilmen (2), die aus einer amorphen magnetischen Legierung des Co-Nb-Zr-Systems bestehen, deren Zusammensetzung in Atomprozent in den Bereich fällt, der in einem ternären Zusammensetzungsdiagramm unter der Annahme, daß der Gesamtgehalt der drei Elemente 100 beträgt, durch Gerade definiert ist, die einen Punkt (80% Co, 14% Nb, 5% Zr), einen Punkt (88% Co, 9% Nb, 3% Zr), einen Punkt (86,5% Co, 13,5% Nb, 1% Zr) und einen Punkt (81% Co, 18% Nb, 1% Zr) verbinden, dadurch gekennzeichnet, daß die Magnetfilme (2) eine negative Magnetostriktionskonstante aufweisen und keilförmige Filme sind, die auf ein Paar von jeweils eine Rippe aufweisenden Substraten (1) aufgesputtert sind, wobei die Substrate (1) derart angeordnet sind, daß die beiden Rippenkanten einander zugewandt sind, wobei die Filme (2) auf den Rippenflächen so angeordnet sind, daß die Filme an den Rippenkanten einander am nächsten kommen und den nicht-magnetischen Spalt (5) bilden, wobei die beiden Substrate (1) aus einem Material bestehen, das einen geringeren Wärmeausdehnungskoeffizient hat als die amorphe magnetische Legierung, und wobei ein Haftglas (3) vorgesehen ist, das die beiden keilförmigen Magnetfilme (2) miteinander verklebt.

8. Magnetkopf nach Anspruch 7, wobei die Zusammensetzung der magnetischen Legierung in Atomprozent in einen Bereich fällt, der in dem ternären Zusammensetzungsdiagramm durch Gerade definiert ist, die einen Punkt (83% Co, 13% Nb, 4% Zr), einen Punkt (86% Co, 11% Nb, 3% Zr), einen Punkt (85% Co, 13% Nb, 2% Zr) und einen Punkt (83% Co, 15% Nb, 2% Zr) verbinden.

9. Magnetkopf nach Anspruch 7 oder 8, wobei das Haftglas ein Glas ist, das PbO als Hauptbestandteil enthält.

## Revendications

1. Méthode de fabrication d'une tête magnétique consistant à agencer une paire de films magnétiques (2; 19) pour former entre eux un espace non magnétique (5; 18), lesdits films étant faits en un alliage magnétique amorphe consistant en Co-Nb-Zr ayant une composition qui tombe, en termes du pourcentage atomique, dans la région définie par des lignes droites reliant, dans un diagramme de composition ternaire, en supposant que le total des teneurs de ces trois éléments est 100, un point (80% Co, 14% Nb, 5% Zr), un point (88% Co, 9% Nb, 3% Zr), un point (86,5% Co, 12,5% Nb, 1% Zr) et un point (81% Co, 18% Nb, 1% Zr), caractérisée en ce que lesdits films (2; 19) sont produits par pulvérisation sur des surfaces d'une paire de substrats (1; 14).

2. Méthode selon la revendication 1, où ladite composition de l'alliage magnétique tombe, en termes du pourcentage atomique, dans la région définie par les lignes droites reliant, dans ledit diagramme de composition ternaire, un point (83% Co, 13% Nb, 4% Zr), un point (86% Co, 11% Nb, 3% Zr), un point (85% Co, 13% Nb, 2% Zr) et un point (83% Co, 15% Nb, 2% Zr).

3. Méthode selon la revendication 1 ou la revendication 2, où lesdits substrats (1; 14) sont faits en ferrite ferromagnétique.

4. Méthode selon l'une quelconque des revendications 1 à 3, consistant à appliquer un verre de liaison (3; 16) pour lier ladite paire de films magnétiques (2; 19).

5. Méthode selon la revendication 4, où la paire de films magnétiques (2; 19) est liée par ledit verre à une température qui n'est pas inférieure à 440°C et l'alliage magnétique amorphe a une température de cristallisation qui n'est pas inférieure à 490°C.

6. Méthode selon la revendication 4, où la paire de films (2; 19) est collée par ledit verre à une température qui n'est pas inférieure à 410°C et l'alliage a une température de cristallisation qui n'est pas inférieure à 460°C.

7. Tête magnétique comprenant:

une paire de films magnètiques (2) agencés face-à-face et formant entre eux un espacement non magnétique (5), lesdits films magnétiques étant faits en un alliage magnétique amorphe du système Co-Nb-Zr et ayant une composition qui tombe, en termes du pourcentage atomique, dans la région définie par les lignes droites reliant, dans un diagramme de composition ternaire, en supposant que les teneurs totales de ces trois éléments est de 100, un point (81% Co, 14% Nb, 5% Zr), un point (88% Co, 9% Nb, 3% Zr), un point (86,5% Co, 12,5% Nb, 1% Zr) et un point (81% Co, 18% Nb, 1% Zr):

caractérisée en ce que lesdits films magnétique (2) ont une constante négative de magnétostriction et sont des films en forme de V qui sont formée par pulvérisation sur une paire de substrat (1), chacun ayant une crête, ladite paire de substrats (1) étant agencée de manière que le sommet de la crête de chacun de ladite paire de substrats soit face au sommet de la crête de l'autre, lesdits films (2) étant formés sur les surfaces des crêtes, de manière qu'au sommet des crêtes les films soient plus proches l'un de l'autre et forment ledit espace non magnétique (5), ladite paire de substrate (1) étant faite en un matériau ayant un plus petit coefficient de dilatation thermique que celui dudit alliage magnètique amorphe, et

avec un verre de liaison (3) qui lie ladite paire de films magnètiques en forme de V (2) l'un à l'autre.

8. Tête magnétique selon la revendication 7, où ladite composition se trouve, en termes de pourcentage atomique, dans la région définie par les lignes droites reliant, dans ledit diagramme de composition ternaire, un point (83% Co, 13% Nb, 4% Zr), un point (86% Co, 11% Nb, 3% Zr), un point (85% Co, 13% Nb, 2% Zr) et un point (83% Co, 15% Nb, 2% Zr).

9. Tête magnétique selon la revendication 7 ou la revendication 8, où ledit verre de liaison est un verre contenant PbO comme constituant majeur.

## FIG. I

FIG. 2

FIG. 3

FIG. 4

FIG. 5

FIG. 6

FIG. 7